Europäisches Patentamt

European Patent Office

Office européen des brevets

(19)

(11) Veröffentlichungsnummer: **0 262 462**
**A2**

(12) **EUROPÄISCHE PATENTANMELDUNG**

(21) Anmeldenummer: 87112983.9

(22) Anmeldetag: 04.09.87

(51) Int. Cl.⁴: **G06F 15/20**

(30) Priorität: 30.09.86 DE 3633294

(43) Veröffentlichungstag der Anmeldung:
06.04.88 Patentblatt 88/14

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Scherl, Wolfgang, Dr.**
**Kafkastrasse 54**
**D-8000 München 83(DE)**

(54) **Verfahren zum Interpretieren formularhafter Dokumente.**

(57) Ein Verfahren zum Interpretieren formularhafter Dokumente, wobei zur Durchführung des Verfahrens eine vorzugsweise rechnergesteuerte Interpretationseinrichtung vorgesehen ist, die eine Datenbank mit datengespeicherten Dokumentmodellen und zumindest einen Arbeitsspeicher enthält, in den ein zu interpretierendes Dokument nach in an sich bekannter Weise durchgeführter Aufnahme, Vorverarbeitung und Grammatik-Analyse in Form eines Dokument-Graphen eingelesen wird. Eine Erkennung des in Form des Dokument-Graphen (D) eingelesenen Formulartyps und die Erkennung der Bedeutung von Benutzereinträgen in das Formular (F) wird dadurch erreicht, daß auf die symbolische Beschreibung des Dokuments in Form des Dokument-Graphen (D) nacheinander verschiedene in einer Wissensbasis gespeicherte Modelle (M) unterschiedlicher Formulare (F) abgebildet werden.

FIG 1

# Verfahren zum Interpretieren formularhafter Dokumente

Die vorliegende Erfindung betrifft ein Verfahren zum Interpretieren formularhafter Dokumente, wobei zur Durchführung des Verfahrens eine vorzugsweise rechnergesteuerte Interpretationseinrichtung vorgesehen ist, die eine Datenbank mit datengespeicherten Dokumentmodellen und zumindest einen Arbeitsspeicher enthält, in den ein zu interpretierendes Dokument nach in an sich bekannter Weise durchgeführter Aufnahme, Ververarbeitung und Gramatik-Analyse in Form eines Dokument-Graphen eingelesen wird.

Es besteht Bedarf für ein System, das ein Formular, welches nicht speziell auf eine automatische Bearbeitung vorbereitet ist, über eine Bildaufnahmeeinrichtung erfaßt, das Layout des Formulars zergliedert und den Formulartyp sowie die Bedeutung der einzelnen Textteile erkennt.

Systeme mit entsprechenden Geräten und/oder Verfahren der eingangs genannten Art sind bisher nicht bekannt geworden.

Der vorliegenden Erfindung liegt die Aufgabe zugrunde, ein Verfahren der eingangs genannten Art zu schaffen.

Die Aufgabe für die vorliegende Erfindung wird durch ein Verfahren der eingangs genannten Art und gemäß dem Oberbegriff des Patentanspruchs 1 gelöst, das durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren, die lediglich bevorzugte Ausführungsbeispiele für die vorliegende Erfindung betreffen, im einzelnen beschrieben.

Fig. 1 zeigt eine schematische Prinzipdarstellung des erfindungsgemäßen Verfahrens in Form eines schematischen Blockschaltbilds.

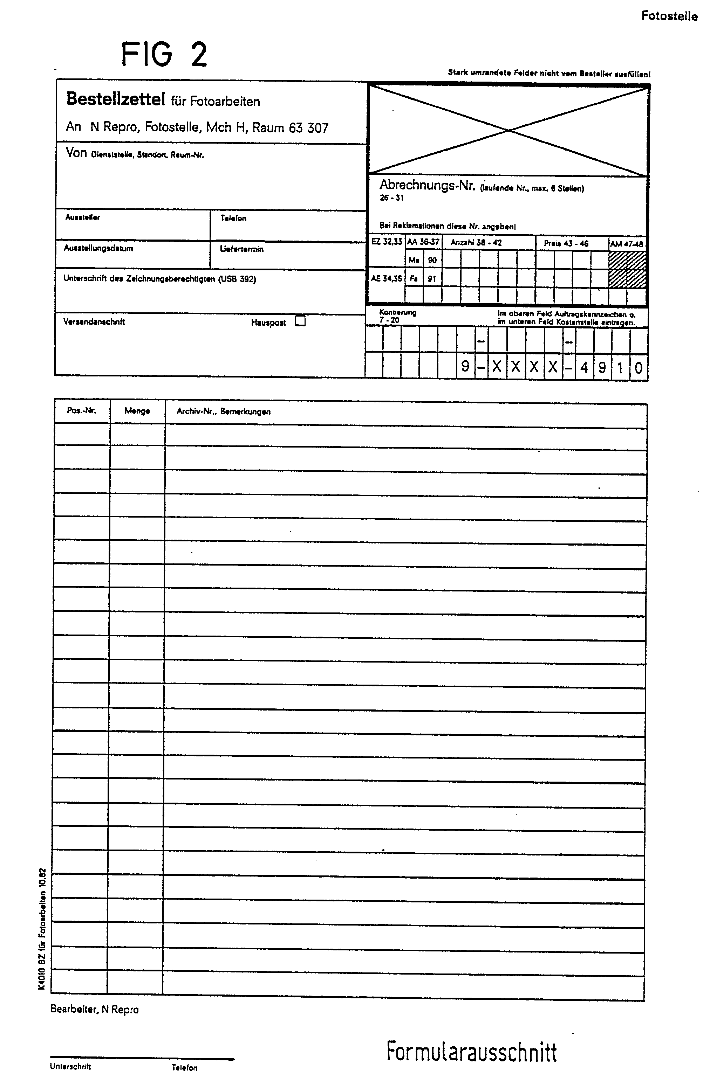

Fig. 2 zeigt das Layout eines typischen Formulars, welches durch das erfindungsgemäße Verfahren bearbeitet werden kann.

Fig. 3 zeigt einen typischen Formularausschnitt sowie ein hierarchisches Modell eines Layout-Teils L mit zwei Layoutebenen L1 L2 und einen Semantikteil S.

Fig. 4 zeigt schematisch das Zusammenwirken des Layout-Modells und eines Kontrollflußplans, wobei der Kontrollflußplan eine erste Ebene K1, eine zweite Ebene K2 sowie eine dritte Ebene K3 aufweist.

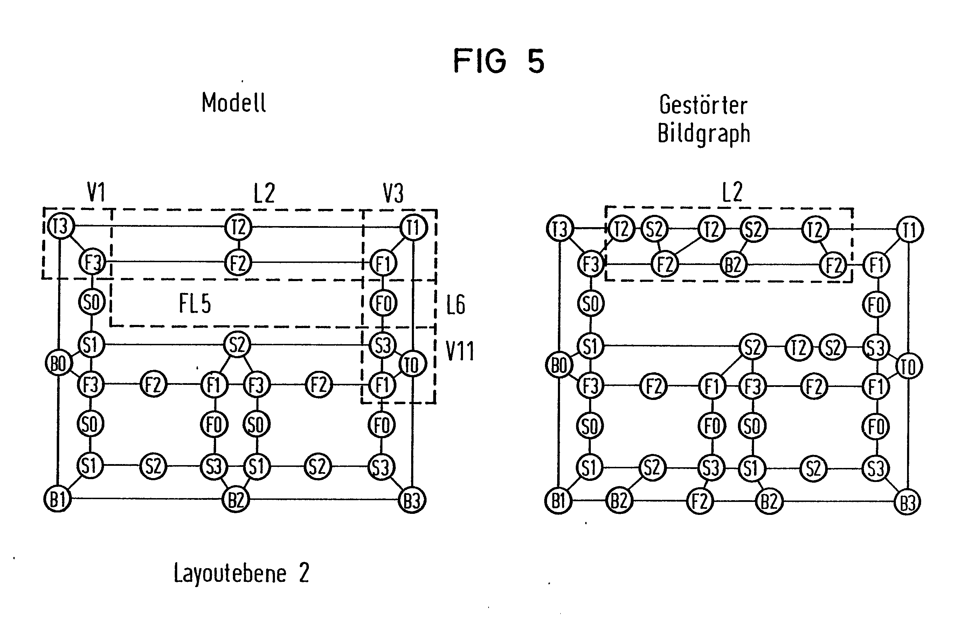

Fig. 5 zeigt schematisch eine Abbildung eines Modells in einem Bild-Graphen.

Fig. 6 zeigt schematisch den Verlauf einer Analysefront in bezug auf verschiedene Logik-Layout-Knoten

Fig. 7 zeigt eine schematische Darstellung des nacheinander-Abbildens von Formularmodellen M in einen Dokument (Bild-Graphen).

Gemäß dem erfindungsgemäßen Verfahren liegt ein Modell eines jeden Formulartyps, das dem System bekannt ist, in einer Interpretationseinrichtung E in Form eines Graphen vor. Die Graphknoten geben einzelne Linien, Flächen, feststehende und als Benutzereintrag erwartete Textelemente, Linienverbindungsstücke, spezielle Symbole uÄ. wieder. Die Kanten zwischen den Knoten geben die lokale Nachbarschaft zwischen den Elementen an. Attribute geben Formularparameter. Größenverhältnisse uÄ. wieder. Der Graph ist hierarchisch gegliedert. Eine Kontrolle steuert den Analysevorgang. Sie ist in Form eines Kontrollgraphen vorgegeben. Die Kontrolle gliedert sich hierarchisch. Die oberste Ebene (übergeordneter Kontrollteil) regelt den Wettbewerb der Modelle bei der Analyse, die zweite Ebene (formularspezifische Kontrollteile) regelt die Aktivität jedes einzelnen Modells. Diese Kontrollteile sind in ihrer Struktur eng an den Modellgraphen gekoppelt. Jeder formularspezifische Kontrollteil bildet entsprechend dem Aufbau des Formulars eine petrinetzähnliche Struktur. Tiefere Ebenen der Kontrolle regeln Details. Die Entscheidung über den Dokumenttyp wird anhand eines Gütemaßes getroffen. Den Teilflächen der Modelle ist eine semantische Information zugeordnet. Beim Abbilden des Modells auf das erfaßte Bildmuster wird diese Information auf dessen Teilmuster übertragen. Die Verarbeitung erfolgt vorzugsweise in einem Parallelrechnersystem. Hierfür ist für die einzelnen Schritte der Primitivextraktion, für jedes Modell für einzelne Teilmuster usw. ein Rechner vorgesehen. Die Zuweisung der Rechner zu ihrer Aufgabe erfolgt dabei dynamisch.

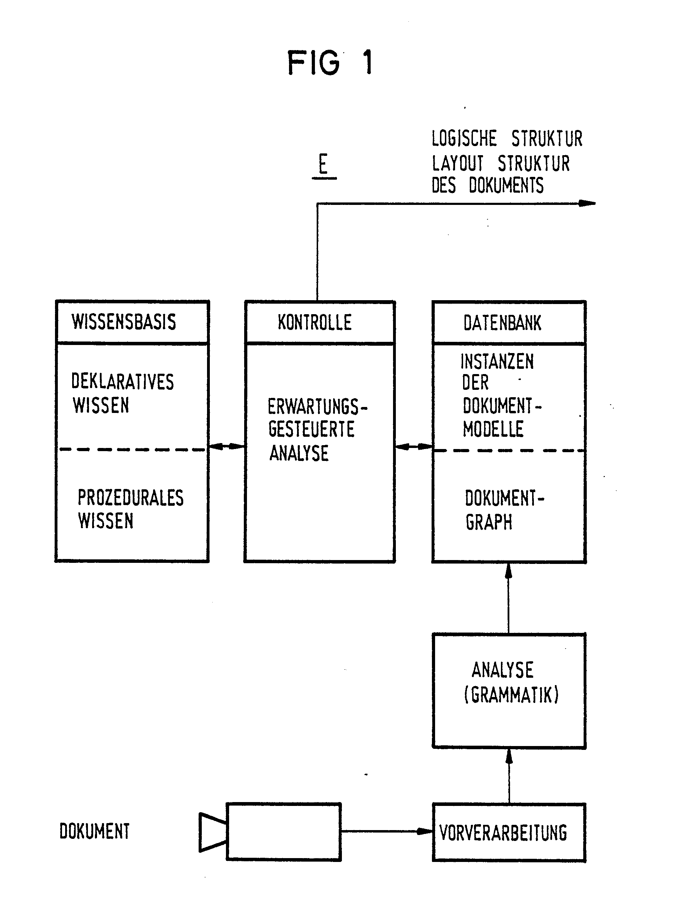

Im einzelnen sieht das erfindungsgemäße Verfahren vor, daß eine Erkennung des in Form des Dokument-Graphen (D) eingelesenen Formulartyps und die Erkennung der Bedeutung von Benutzereinträgen in das Formular F dadurch erreicht wird, daß auf die symbolische Beschreibung des Dokuments in Form des Dokument-Graphen D nacheinander verschiedene in einer Wissensbasis gespeicherte Modelle M unterschiedlicher Formulare F abgebildet werden, vergl. Fig. 1. Die Abbildung der Modelle M erfolgt der Reihe nach auf dem Dokument-Graphen D in einem Wettstreit der Modelle M. Es wird derjenige Formulartyp als erkannt betrachtet, dessen Modell M · den höchsten Gütegrad bei der Abbildung aufweist.

Die Modelle M der einzelnen Formulartypen werden vor der eigentlichen Betriebsphase des Verfahrens in einer Trainingsphase der Interpretationseinrichtung E mit Hilfe eines Operators in an sich bekannter Weise eingelesen.

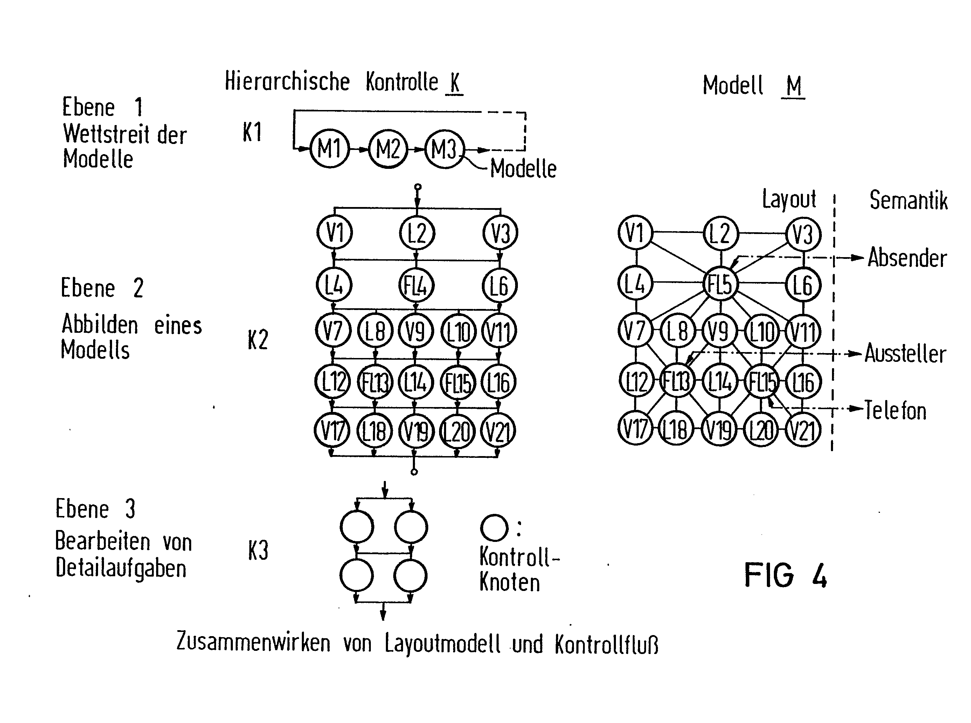

Der Wettstreit der Modelle M wird erfindungsgemäß durch einen Kontrollflußplan K geregelt, vergl. Fig. 4.

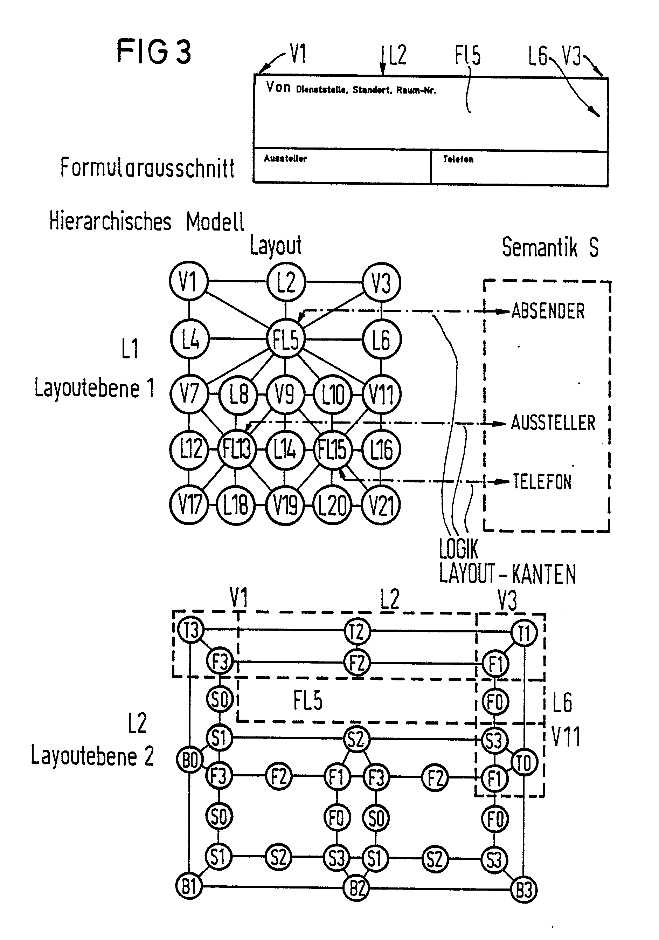

Es ist erfindungsgemäß vorgesehen, daß jedes Modell M aus einem Layout-Teil L und einem Semantik-Teil S, vergl. Fig. 3, besteht, daß bei der Abbildung der Modelle M auf den Dokument-Graphen D Teile des Modell-Layout-Teils L den entsprechenden Teilen des extrahierten Dokument-Graphen durch Zeiger zugeordnet werden, daß bei dieser Abbildung die Semantik einzelner Flächen des Modells M auf entsprechende Flächen des Dokument-Graphen D übertragen werden und daß die Semantik desweiteren auch auf die von dem betreffenden Benutzer des Formulars F eingetragenen Textteile innerhalb dieser Fläche übertragen werden.

Jedes der Modelle M ist jeweils in Form eines Graphen mit Knoten und Kanten dargestellt, wobei diese Darstellungsform in der Interpretationseinrichtung E in Form einer Datenstruktur in an sich bekannter Weise realisiert wird. Der Layout-Teil L gibt alle fest vorgegebenen Teile des betreffenden Hintergrundmusters eines Formulars F in Form von Knoten wieder, wobei die Knotenlinien LN, Verbindungspunkte V, Zwischenlinien LN, Flächen FL, feststehende Textteile TX sowie ggf. Sondersymbole repräsentieren. Die Kanten oder Zeiger zeigen Nachbarschaften zwischen Elementen wie Linien Ln, Verbindungspunkten V, Zwischenlinien LN, Flächen FL, feststehenden Textteilen TX sowie Sondersymbolen.

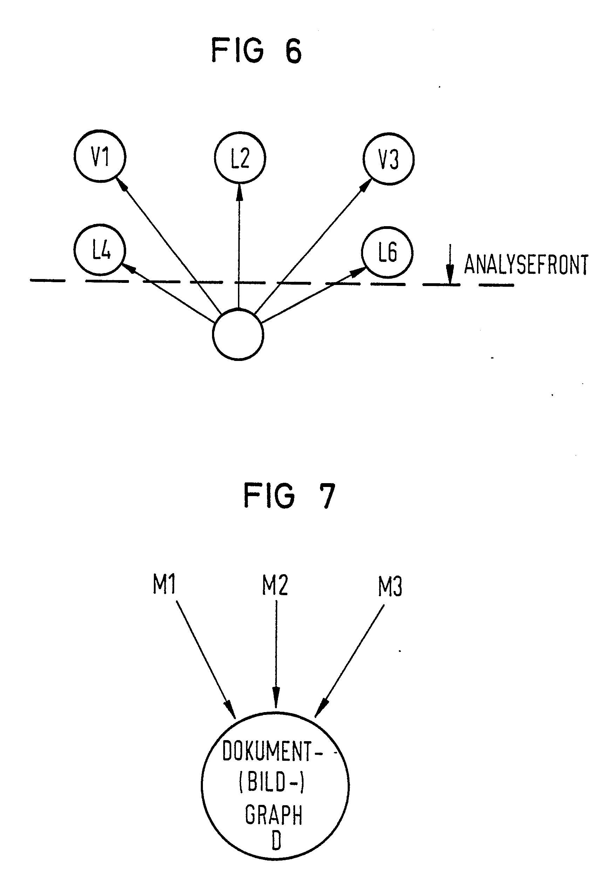

Der Semantik-Teil S besteht aus Graph-Knoten, in die Attribute eingetragen sind, welche Attribute die Bedeutung einer Formularfläche wiedergeben. Jeder Semantikknoten ist übe eine Logik-Layout-Kante mit einem Layout-Knoten verbunden, der eine Formularfläche repräsentiert. In den Knoten, die Flächen repräsentieren, sind Hinweise auf zu erwartende, variable Benutzereinträge enthalten. Die Knoten-und Kanten-Attribute geben jeweils Information über Linienlänge, Liniendicke, Flächengestalt u.a.m. wieder. Der Layout-Teil L ist hierarchisch gegliedert, wobei ein oberer Teil L1 übergeordnete Begriffe, wie Linien und Flächen, und der untere Teil L2 die zugehörigen, idealen Primitive (Rand-bzw. Flächenprimitive) wiedergibt, vergl. Fig. 3. Zwischen den oberen Teil L1 und den unteren Teil L2 besteht ein eindeutiger Zusammenhang durch ein Verzeigerungssystem der beiden Ebenen, in denen die beiden Teile liegen. Die Information des Semantik-Teils S ist in den Layout-Knoten jeweils als Zeichenfolge (string) eingetragen. Jeder Knoten des Layout-Modells enthält Verweise auf Vergleichselemente, mit deren Hilfe die wahre Lage des Elements in dem Dokument D bei einer vorzunehmenden Analyse berechnet wird, vergl. Fig. 6.

Der Kontrollflußplan K ist vorgegeben und hierarchisch gegliedert. Er steuert den Analysevorgang. Der hierarchische Aufbau des Kontrollflußplans K ist in drei Ebenen verteilt, vergl. Fig. 4, wobei eine erste Ebene K1 den Wettbewerb der Modelle M bei der Abbildung auf den Dokument-Graphen D steuert und wobei diese erste Ebene K1 allen Modellen M1, M2, M3... gemeinsam zugeordnet ist, wobei sich eine zweite Ebene K2 in mehrere Teilkontrollflußpläne aufspaltet und wobei jeder jeweils spezifisch an ein bestimmtes Modell, z. B. M1, angepaßt ist und eine Zielsteuerung der Analysevorgänge zum Erkennen einzelner Formularelemente, wie z.B. Linien, Flächen usw. regelt, und wobei eine dritte Ebene K3 Detailaufträge für die zweite Ebene K2 abwickelt. Jedes Modell M ist durch Kontrollknoten in der ersten Ebene K1 repräsentiert, welche Kontrollknoten zyklisch durchlaufen werden. Die Kontrollknoten stoßen bei jedem Analysedurchlauf einen Schritt in der zweiten Ebene K2 an. Für jeden Analyseschritt wird eine Gütemeldung an die erste Ebene K1 geliefert. Für jeden Durchlauf durch einen Modul wird die gesamte momentane Güte jedes Modells M beurteilt und jeweils mit den momentanen Gesamtgüten der anderen Modelle M verglichen. Schlecht beurteilte Modelle M werden während des jeweils folgenden Durchlaufs der Analyse überlaufen, wodurch vorteilhafter Weise ein zeitsparende Abbildung der restlichen Modelle M auf den Dokument-Graphen ermöglicht wird.

Der formularspezifische Kontrollteil in der zweiten Ebene K2 steuert die Analyse derart, daß die zu erfassenden Elemente von oben nach unten laufend angesteuert werden. Der formularspezifische Kontrollteil in der zweiten Ebene K2 ist eng mit dem Layout des erkennenden Formulartyp verknüpft.

Nebeneinander liegende Elemente sind in parallelen Ästen des Kontrollflußplans angeordnet, wobei sich ein Kontrollflußplan nach dem Vorbild eines Petrinetzes ergibt und wobei derartige nebeneinander liegende Elemente jeweils in ihrer Gesamtheit eine Analysefront bilden, vergl. Fig. 6. Dieses Petrinetz wird vorzugsweise mittels eines Mehrrechnersystems bearbeitet, wobei die nebeneinander liegenden Elemente der Analysefront jeweils in verschiedenen Rechnereinheiten bearbeitet werden. Für jedes Formular F ist in der zweiten Ebene K2 ein schrittweiser Verlauf der Analyse festgelegt. Der Kontrollflußplan K steuert die Analyse derart, daß die Analysefront von oben nach unten bezogen auf den Dokument-Graphen D läuft.

Jeder Kontrollknoten hat Aufgaben zum Holen des zu suchenden Elementtyps aus dem Layout-Modell, zum Festlegen von Vergleichselementen hinter der Analysefront, d. h. von Elementen, welche bereits erkannt und dem Modell M zugeordnet sind, vergl. Fig. 6, zum Berechnen von Analyseparametern (Ort, Länge, Drehlage...) aus den bereits bekannten Vergleichselementen, vergl. Fig. 6, zum Anstoßen der Analysemethode zum Erkennen des gesuchten Elements in dem Dokument-Graphen D, zum Zuordnen des erkannten Elements zu dem entsprechenden Element des Modells M und zum Beurteilen der Erkennungsgüte des betreffenden Elements und Rückmelden der erfaßten Güte auf die erste Ebene K1 zu erfüllen. Eine Gesamtgütebeurteilung wird mittels der ersten Ebene K1 durchgeführt. In der dritten Ebene K3 des Kontrollflußplans wird ein Suchauftrag (z. B. "Suche Linie!") in Einzelaufträge aufgelöst, die gezielt einzelne Deskriptoren, Flächenelemente, Feinrandelemente, Quadrate usw. bearbeiten.

Ein Element in einer ersten Ebene des Layout L löst sich in der hierarchisch tieferen Ebene in einzelne Primitive auf, vergl. Fig. 3. Bei der Abbildung des Modells M auf dem Dockument-Graphen K werden ideale Modellelemente der tieferen Ebene des Layout L, nämlich L2, auf die entsprechenden Elemente des Dokument-Graphen D abgebildet. Die jeweilige Abbildung erfolgt durch Zeiger innerhalb der betreffenden Modellknoten bzw. des Dokument-Graphen. Nachdem die Abbildung eines Elements erfolgt ist, wird einem Element der Modellebene 1, nämlich der Layout-Ebene L1 (z. B. eine Fläche FL5) eine Folge von Primitivelementen in dem Dokument-Graphen D zugeordnet.

Für das eingangs erläuterte Training jedes Modells ist erfindungsgemäß folgendes vorgesehen:

Nach erfolgtem Training jedes Modells wird automatisch aus dem Layout-Teil des Modells der formularspezifische Kontrollflußplan zu dessen Analyse abgeleitet. Dieser formularspezifische Kontrollflußplan erweitert die zweite Ebene K2 des Gesamtkontrollflußplans. Er wird zusätzlich durch einen Knoten in der ersten Ebene K1 vertreten. Die automatische Ableitung des Kontrollflußplans erfolgt dadurch, daß durch horizontale Nachbarschaft nebeneinander liegende Elemente des Modells in Kontrollknoten nebeneinander liegender Äste des formularspezifischen Kontrollflußplans abgebildet werden und auf diese Weise eine Zeile einer Analysefront gebildet wird. Vertikal benachbarte Elemente des Modells werden in zeitlich aufeinander folgenden Analysefronten des Kontrollflußplans abgebildet.

## Ansprüche

1. Verfahren zum Interpretieren formularhafter Dokumente, wobei zur Durchführung des Verfahrens eine vorzugsweise rechnergesteuerte Interpretationseinrichtung vorgesehen ist, die eine Datenbank mit datengespeicherten Dokumentmodellen und zumindest einen Arbeitsspeicher enthält, in den ein zu interpretierendes Dokument nach in an sich bekannter Weise durchgeführter Aufnahme, Vorverarbeitung und Grammatik-Analyse in Form eines Dokument-Graphen eingelesen wird, dadurch **gekennzeichnet,** daß eine Erkennung des in Form des Dokument-Graphen (D) eingelesenen Formulartyps und die Erkennung der Bedeutung von Benutzereinträgen in das Formular (F) dadurch erreicht wird, daß auf die symbolische Beschreibung des Dokuments in Form des Dokument-Graphen (D) nacheinander verschiedene in einer Wissensbasis gespeicherte Modelle (M) unterschiedlicher Formulare (F) abgebildet werden (vergl. Fig. 1).

2. Verfahren nach Anspruch 1, dadurch **gekennzeichnet,** daß die Abbildung der Modelle (M) der Reihe nach auf den Dokument-Graphen (D) in einem Wettstreit der Modelle (M) erfolgt und daß derjenige Formulartyp als erkannt betrachtet wird, dessen Modell (M) den höchsten Gütegrad bei der Abbildung aufweist.

3. Verfahren nach Anspruch 1, dadurch **gekennzeichnet,** daß die Modelle (M) der Formulartypen in einer Trainingsphase der Interpretationseinrichtung (E) mit Hilfe eines Operators in an sich bekannter Weise eingelesen werden.

4. Verfahren nach Anspruch 2, dadurch **gekennzeichnet,** daß der Wettstreit der Modelle (M) durch einen Kontrollflußplan (K) geregelt wird (vergl. Fig. 4).

5. Verfahren nach Anspruch 1, adurch **gekennzeichnet,** daß jedes Mode (M) aus einem Layout-Teil (L) und einem Semantik-Teil (S) (vergl. Fig. 3) besteht, daß bei der Abbildung der Modelle (M) auf den Dokument-Graphen (D) Teile des Modell-Layout-Teils (L) den entsprechenden Teilen des extrahierten Dokument-Graphen durch Zeiger zugeordnet werden, daß bei dieser Abbildung die Semantik einzelner Flächen des Modells (M) auf entsprechende Flächen des Dokument-Graphen (D) übertragen werden und daß die Semantik desweiteren auch auf die von dem betreffenden Benutzer des Formulars (F) eingetragenen Textteile innerhalb dieser Flächer übertragen werden.

6. Verfahren nach Anspruch 5, dadurch **gekennzeichnet,** daß jedes der Modelle (M) jeweils in Form eines Graphen mit Knoten und Kanten dargestellt ist, wobei diese Darstellungsform in der Interpretationseinrichtung (E) in Form einer Datenstruktur in an sich bekannter Weise realisiert ist.

7. Verfahren nach Anspruch 5, dadurch **gekennzeichnet,** daß der Layout-Teil (L) alle fest vorgegebenen Teile des betreffenden Hintergrundmusters eines Formulars (F) in Form von Knoten wiedergibt, wobei die Knoten Linien (LN), Verbindungspunkte (V) zwischen Linien (LN), Flächen (FL), feststehende Textteile (TX) sowie gegebenenfalls Sondersymbole repräsentieren.

8. Verfahren nach Anspruch 6, dadurch **gekennzeichnet,** daß die Kanten oder Zeiger lokale Nachbarschaften zwischen Elementen wie Linien (LN), Verbindungspunkten (V), Zwischenlinien (LN), Flächen (FL), feststehenden Textteilen (TX) sowie Sondersymbolen zeigen.

9. Verfahren nach Anspruch 5, dadurch **gekennzeichnet,** daß der Semantik-Teil (S) aus Graph-Knoten besteht, in die Attribute eingetragen sind, welche Attribute die Bedeutung einer Formularfläche wiedergeben, daß jeder Semantikknoten über eine. Logik-Layout-Kante mit einem Layout-Knoten verbunden ist, der eine Formularfläche repräsentiert, und daß in den Knoten, die Flächen repräsentieren, Hinweise auf zu erwartende, variable Benutzereinträge enthalten sind.

10.Verfahren nach Anspruch 7 oder 8, dadurch **gekennzeichnet,** daß die Knoten-und Kanten-Attribute jeweils Information über Linienlänge, Liniendicke, Flächengestalt u.a.m. wiedergeben.

11.Verfahren nach Anspruch 5, dadurch **gekennzeichnet,** daß der Layout-Teil (L) hierarchisch gegliedert ist, wobei ein oberer Teil (L1) übergeordnete Begriffe, wie Linien und Flächen, und der untere Teil (L2) die zugehörigen idealen Primitive (Rand-bzw. Flächenprimitive) wiedergibt.

12.Verfahren nach Anspruch 11, dadurch **gekennzeichnet,** daß zwischen dem oberen Teil (L1) und dem unteren Teil (L2) ein eindeutiger Zusammenhang durch ein Verzeigerungssystem der beiden Ebenen, in denen die beiden Teile liegen, besteht.

13.Verfahren nach Anspruch 5, dadurch **gekennzeichnet,** daß die Information des Semantik-Teils (S) in den Layout-Knoten jeweils als eine Zeichnenfolge (string) eingetragen ist.

14.Verfahren nach Anspruch 5, dadurch **gekennzeichnet,** daß jeder Knoten des Layout-Modells Verweise auf Vergleichselemente enthält, mit deren Hilfe die wahre Lage des Elements in dem Dokument (D) bei einer vorzunehmenden Analyse berechnet wird, (Fig. 6).

15.Verfahren nach Anspruch 4, dadurch **gekennzeichnet,** daß der Kontrollflußplan (K) vorgegeben und hierarchisch gegliedert ist und daß der Kontrollflußplan (K) den Analysevorgang steuert.

16.Verfahren nach Anspruch 15, dadurch **gekennzeichnet,** daß der hierarchische Aufbau des Kontrollflußplans in drei Ebenen unterteilt ist, wobei eine erste Ebene (K1), den Wettbewerb der Modelle (M) bei der Abbildung auf den Dokument-Graphen (D) steuert und wobei diese erste Ebene (K1) allen Modellen (M1, M2, M3...) gemeinsam zugeordnet ist, wobei sich eine zweite Ebene (K2) in mehrere Teilkontrollflußpläne aufspaltet und wobei jeder davon jeweils spezifisch an ein bestimmtes Modell (z. B. M1) angepaßt ist und eine Zielsteuerung der Analysevorgänge zum Erkennen einzelner Formularelemente, wie z. B. Linien, Flächen usw. regelt, und wobei eine dritte Ebene (K3) Detailaufträge für die zweite Ebene (K2) abwickelt.

17.Verfahren nach Anspruch 15 oder 16, dadurch **gekennzeichnet,** daß jedes Modell (M) durch Kontrollknoten in der ersten Ebene (K1) repräsentiert ist, welche Kontrollknoten zyklisch durchlaufen werden, daß die Kontrollknoten bei jedem Analysedurchlauf einen Schritt in der zweiten Ebene (K2) anstoßen, daß für jeden Analyseschritt eine Gütemeldung an die erste Ebene (K1) geliefert wird und daß für jeden Durchlauf durch einen Modul die gesamte momentane Güte jedes Modells (M) beurteilt und jeweils mit den momentanen Gesamtgüten der anderen Modelle (M) verglichen wird.

18.Verfahren nach Anspruch 17, dadurch **gekennzeichnet,** daß schlecht beurteilte Modelle (M) während des folgenden Durchlaufs der Analyse überlaufen werden, wodurch vorteilhafter Weise eine zeitsparende Abbildung der restlichen Modelle (M) auf den Dokument-Graphen (D) ermöglicht wird.

19.Verfahren nach Anspruch 16, dadurch **gekennzeichnet,** daß der formularspezifische Kontrolteil in der zweiten Ebene (K2) die Analyse derart steuert, daß die zu erfassenden Elemente von oben nach unten laufend angesteuert werden.

20.Verfahren nach Anspruch 19, dadurch **gekennzeichnet,** daß der formularspezifische Kontrolteil in der zweiten Ebene (K2) eng mit dem Layout des zu erkennenden Formulartyps verknüpft ist.

21.Verfahren nach Anspruch 19, dadurch **gekennzeichnet,** daß nebeneinander liegende Elemente in parallelen Ästen des Kontrollflußplans angeordnet sind, wobei sich ein Kontrollflußplan nach dem Vorbild eines Petrinetzes ergibt und wobei derartige nebeneinander liegende Elemente jeweils in ihrer Gesamtheit eine Analysefront bilden.

22.Verfahren nach Anspruch 21, dadurch **gekennzeichnet,** daß das Petrinetz vorzugsweise mittels eines Mehrrechnersystems bearbeitet wird, wobei die nebeneinander liegenden Elemente der Analysefront jeweils in verschiedenen Rechnereinheiten bearbeitet werden.

23.Verfahren nach Anspruch 21, dadurch **gekennzeichnet,** daß ein schrittweiser Verlauf der Analysefront für jedes Formular (F) in der zweiten Ebene (K2) festgelegt ist.

24.Verfahren nach Anspruch 23, dadurch **gekennzeichnet,** daß der Kontrollflußplan (K) die Analyse derart steuert, daß die Analysefront von oben nach unten bezogen auf den Dokument-Graphen (D) läuft.

25.Verfahren nach den Ansprüchen 14 und 19, dadurch **gekennzeichnet,** daß jeder Kontrollknoten Aufgaben zum

-Holen des zu suchenden Elementtyps aus dem Layout-Modell,

-Festlegen von Vergleichselementen hinter der Analysefront, d. h. von Elementen, welche bereits erkannt und dem Modell (M) zugeordnet sind (Fig. 6),

-Berechnen von Analyseparametern (Ort, Länge, Drehlage...) aus den bereits bekannten Vergleichselementen (Fig. 6),

-Anstoßen der Analysemethode zum Erkennen des gesuchten Elements in dem Dokument-Graphen (D),

-Zuordnen des erkannten Elements zu dem entsprechenden Element des Modells (M) und

- Beurteilen der Erkennungsgüte des betreffenden Elements und Rückmelden der erfaßten Güte auf die erste Ebene (K1) zu erfüllen hat.

26.Verfahren nach Anspruch 25, dadurch **gekennzeichnet,**daß eine Gesamtgütebeurteilung mittels der ersten Ebene (K1) durchgeführt wird.

27.Verfahren nach Anspruch 16, dadurch **gekennzeichnet,** daß in der dritten Ebene (K3) des Kontrollflußplans ein Suchauftrag (z. B. "Suche Linie!") in Einzelaufträge aufgelöst wird, die gezielt einzelne Deskriptoren, Flächenelemente, Feinrandelemente, Quadrate usw. bearbeiten.

28.Verfahren nach Anspruch 1, dadurch **gekennzeichnet,** daß ein Element in einer ersten Ebene des Layout (L) sich in der hierarchisch tieferen Ebene in einzelne Primitive auflöst, daß bei der Abbildung des Modells (M) auf den Dokument-Graphen (D) ideale Modellelemente der tieferen Ebene des Layout (L) auf die entsprechenden Elemente des Dokument-Graphen (D) abgebildet werden und daß die jeweilige Abbildung durch Zeiger innerhalb der betreffenden Modellknoten bzw. des Dokument-Graphen erfolgt.

29.Verfahren nach Anspruch 27, dadurch **gekennzeichnet,** daß nachdem die Abbildung eines Elements erfolgt ist, einem Element der Modell-Ebene 1 (z. B. eine Fläche FL5) eine Folge von Primitivelementen in dem Dokument-Graphen (D) zugeordnet wird.

30.Verfahren nach Anspruch 3 oder 4, dadurch **gekennzeichnet,** daß nach erfolgtem Training jedes Modells automatisch aus dem Layout-Teil des Modells der formularspezifische Kontrollflußplan zu dessen Analyse abgeleitet wird,

-daß dieser formularspezifische Kontollflußplan die zweite Ebene (K2) des Gesamtkontrollflußplans erweitert und zusätzlich durch einen Knoten in der ersten Ebene (K1) vertreten wird,

-daß die automatische Ableitung des obigen Kontrollflußplans dadurch erfolgt, daß durch horizontale Nachbarschaft nebeneinanderliegende Elemente des Modells in Kontrollknoten nebeneinanderliegender Äste des formularspezifischen Kontrollflußplans abgebildet werden und auf diese Weise eine Zeile einer Analysefront gebildet wird, und

-daß vertikal benachbarte Elemente des Modells in zeitlich aufeinanderfolgenden Analysefronten des Kontrollflußplans abgebildet werden.

FIG 1

E

LOGISCHE STRUKTUR
LAYOUT STRUKTUR
DES DOKUMENTS

| WISSENSBASIS | KONTROLLE | DATENBANK |
|---|---|---|
| DEKLARATIVES WISSEN | ERWARTUNGS- GESTEUERTE ANALYSE | INSTANZEN DER DOKUMENT- MODELLE |
| PROZEDURALES WISSEN | | DOKUMENT- GRAPH |

ANALYSE
(GRAMMATIK)

DOKUMENT

VORVERARBEITUNG

0 262 462

Fotostelle

# FIG 2

Stark umrandete Felder nicht vom Besteller ausfüllen!

**Bestellzettel** für Fotoarbeiten

An N Repro, Fotostelle, Mch H, Raum 63 307

Von Dienststelle, Standort, Raum-Nr.

| Aussteller | Telefon |
|---|---|
| Ausstellungsdatum | Liefertermin |

Unterschrift des Zeichnungsberechtigten (USB 392)

Versandanschrift          Hauspost ☐

Abrechnungs-Nr. (laufende Nr., max. 6 Stellen)
26 - 31

Bei Reklamationen diese Nr. angeben!

| EZ 32,33 | AA 36-37 | Anzahl 38 - 42 | | | | | Preis 43 - 46 | | | | AM 47-48 |
|---|---|---|---|---|---|---|---|---|---|---|---|
| | Ma | 90 | | | | | | | | | |
| AE 34,35 | Fa | 91 | | | | | | | | | |

Kontierung 7 - 20 — Im oberen Feld Auftragskennzeichen o. im unteren Feld Kostenstelle eintragen.

| | | | | | — | | | | — | 9 | X | X | X | — | 4 | 9 | 1 | 0 |

| Pos.-Nr. | Menge | Archiv-Nr., Bemerkungen |
|---|---|---|
| | | |

K4010 BZ für Fotoarbeiten 10.82

Bearbeiter, N Repro

Unterschrift          Telefon

Formularausschnitt

0 262 462

# FIG 3

Von Dienststelle, Standort, Raum-Nr.

Aussteller | Telefon

Formularausschnitt

Hierarchisches Modell

Layout                                          Semantik S

L1

Layoutebene 1

ABSENDER

AUSSTELLER

TELEFON

LOGIK
LAYOUT-KANTEN

L2

Layoutebene 2

Hierarchische Kontrolle <u>K</u>

Modell <u>M</u>

Ebene 1
Wettstreit der
Modelle

Ebene 2
Abbilden eines
Modells

Ebene 3
Bearbeiten von
Detailaufgaben

○ : Kontroll-
Knoten

FIG 4

Zusammenwirken von Layoutmodell und Kontrollfluß

0 262 462

# FIG 5

Modell

Gestörter
Bildgraph

Layoutebene 2

0 262 462

# FIG 6

V1  L2  V3

L4  L6  ANALYSEFRONT

# FIG 7

M1  M2  M3

DOKUMENT-
(BILD-)
GRAPH
D